# FASCICULE DE BREVET EUROPEEN

(11) **EP 1 244 281 B1**
(45) Date de publication et mention de la délivrance du brevet: **30.11.2005**
(21) Numéro de dépôt: 01810292.1
(22) Date de dépôt: 21.03.2001
(51) Int. Cl.: H04M 3/42, H04Q 3/00

(54) **Méthode et dispositif permettant d'offrir un ensemble de services vocaux personnalisables à un utilisateur dans un réseau de télécommunication vocal**
Verfahren und Vorrichtung, um einem Benutzer personalisierbare Sprachdienste in einem Sprachtelekommunikationsnetzwerk anzubieten
Method and device for providing a user with personalizable voice services in a voice telecommunications network

(43) Date de publication de la demande: 25.09.2002
(73) Titulaire: Swisscom AG, 3050 Bern (CH)
(72) Inventeur: Van Kommer, M. Robert, 1752 Villars-sur-Glâne (CH)
(74) Mandataire: P&TS Patents & Technology Surveys SA

(56) Documents cités:
- EP-A- 0 942 574
- US-A- 5 652 789
- US-A- 5 771 273
- US-A- 6 021 181

## Description

La présente invention concerne une méthode permettant d'offrir un ensemble de services vocaux personnalisables aux utilisateurs dans un réseau de télécommunication vocal. De manière plus générale, la présente invention concerne le domaine des services à valeur ajoutée proposés par un opérateur d'un réseau de télécommunication aux utilisateurs du réseau.

Les services à valeur ajoutée dans les réseaux de télécommunication ont connu un développement important depuis plusieurs années. Plusieurs phénomènes contribuent à cette évolution. D'une part les besoins en communication et en mobilité des utilisateurs des réseaux de télécommunication vont en croissant avec les nouvelles formes de travail mobile et décentralisé. D'autre part la commercialisation de ces nouveaux services permet aux opérateurs des réseaux de télécommunication de compenser la baisse constante du prix des télécommunications. Par ailleurs l'évolution technologique, en particulier le traitement et transport numérique de la voix, permet de développer de nouveaux services plus rapidement et à moindre coût.

Les communications vocales entre personnes au travers d'un réseau de télécommunication vocal dans les systèmes de télécommunication existants sont généralement des communications point-à-point. Des communications multipoints sont parfois établies dans le cadre de téléconférences.

On connaît déjà des assistants personnels numériques (PDA, Personal Digital Assistants) qui permettent de fournir différents types de services à valeur ajoutée aux utilisateurs d'un réseau de télécommunication vocal. Les PDA peuvent être logés dans le dispositif terminal de l'utilisateur ou, plus récemment, dans un serveur de l'infrastructure du réseau, par exemple dans un central numérique. Les PDAs sont essentiellement utilisés lors de l'établissement de la communication, par exemple en fournissant une assistance à la sélection, un accès à un répertoire électronique ou la possibilité de gérer une boîte aux lettres vocale. Les PDAs sont le plus souvent réalisés au moyen de programmes informatiques "conventionnels", c'est-à-dire sans recourir à l'intelligence artificielle ni à des agents logiciels. Ils utilisent parfois une interface utilisateur vocale (VUI, Voice User Interface) permettant de les commander à l'aide de commandes vocales. L'interface vocale définit en outre la voix synthétisée par l'assistant et l'organisation hiérarchique des services et informations à disposition.

Un exemple d'un assistant personnel numérique réalisé à l'aide d'un programme informatique comportant certaines caractéristiques d'un agent logiciel est décrit dans US5999611. Le programme décrit dans ce document permet par exemple d'effectuer un appel téléphonique en prononçant le nom de la personne appelée, de gérer un répertoire ou une boîte aux lettres vocale ou de dévier un appel par exemple. Ce programme ne permet toutefois pas de fournir des services pendant la partie conversationnelle de la communication entre l'appelant et l'appelé.

US-A-5652789 décrit un assistant vocal électronique constitué par un agent logiciel installé dans un équipement privé de l'abonné. L'assistant est capable d'intervenir durant une conversation entre cet abonné et un autre interlocuteur. Il dispose par ailleurs d'une certaine autonomie pour prendre des initiatives.

US-A-6021181 décrit une solution similaire, et suggère d'associer plusieurs agents à un seul abonné, qui se répartissent différentes tâches.

US-A-5771273 décrit une plate-forme d'assistance vocale dans un réseau intelligent. La plate-forme peut aussi intervenir pendant la phase conversationnelle d'une communication. Les possibilités de configuration sont limitées.

EP-A-942574 décrit un autre assistant vocal fonctionnant soit en mode background (écoute), soit en mode foreground pendant lequel il peut prendre part à une conversation.

Un but de la présente invention est de proposer une méthode permettant d'étendre le type de services offerts à un utilisateur dans un réseau de télécommunication vocal.

Un autre but de la présente invention est de proposer de nouveaux services aux utilisateurs pendant la partie conversationnelle d'une conversation téléphonique.

Un autre but de la présente invention est de proposer une méthode permettant d'offrir des services plus faciles à personnaliser, tout en simplifiant la programmation, l'installation et la maintenance des programmes mettant en oeuvre ces services.

Selon l'invention, ces buts sont atteints au moyen des éléments des différentes revendications indépendantes, des variantes préférentielles étant par ailleurs indiquées dans les revendications dépendantes.

En particulier, ces buts sont atteints au moyen d'une méthode permettant d'offrir un ensemble de services personnalisables à un utilisateur dans un réseau de télécommunication vocal, comprenant une étape de mise à disposition dudit utilisateur d'au moins un agent logiciel vocal personnel pour lui fournir au moins un service, lesdits agents vocaux étant logés dans un ou plusieurs ordinateurs dans l'infrastructure dudit réseau de télécommunications, lesdits agents vocaux utilisant un système de reconnaissance de parole permettant audit utilisateur de les commander au moyen de commandes vocales au travers dudit réseau de télécommunication,
ainsi qu'une étape d'activation dudit service au moyen de commandes vocales prononcées par ledit utilisateur pendant la partie conversationnelle d'une communication avec un autre utilisateur dudit réseau de télécommunication.

Cette solution présente l'avantage d'utiliser des agents logiciels vocaux pour mettre à disposition les services fournis. Par rapport aux programmes ordinaires, les agents logiciels ont l'avantage d'être plus faciles à programmer, à maintenir et à utiliser. L'agent logiciel vocal est personnel, en sorte que chaque utilisateur peut avoir son propre agent ou ensemble d'agents adapté à ses besoins et à son budget, et qu'il peut en outre personnaliser chaque agent selon ses préférences.

Par ailleurs, cette solution a l'avantage d'offrir des services accessibles également pendant la partie conversationnelle d'une communication entre utilisateurs du réseau de télécommunication vocal.

L'agent logiciel vocal est de préférence autonome, proactif, capable d'intervenir de lui-même dans la conversation et capable d'adapter son comportement futur en fonction de son expérience passée.

Plusieurs agents logiciels vocaux peuvent être mis à disposition de chaque utilisateur pour offrir des services complexes ou pour augmenter le nombre de services mis à disposition. Différents agents peuvent coopérer pour se déléguer des tâches.

Dans une variante préférentielle de l'invention, les agents logiciels vocaux sont installés dans l'infrastructure du réseau par l'utilisateur lui-même, soit au moyen de commandes vocales, soit par l'intermédiaire du réseau Internet. De nouveaux agents peuvent être développés et commercialisés par des tiers et installés par chaque utilisateur dans l'infrastructure du réseau. Cette caractéristique présente l'avantage d'une flexibilité accrue par rapport aux solutions existantes.

Dans une variante préférentielle de l'invention, les agents logiciels vocaux peuvent être activés ou désactivés au moyen de commandes vocales. Un agent logiciel vocal désactivé ne participe pas à la conversation; il peut toutefois écouter la ligne pour attendre un ordre de réactivation.

L'invention sera mieux comprise à l'aide de la description donnée à titre d'exemple et illustrée par les figures annexées qui montrent:
La figure 1 un schéma-bloc d'une variante de système de télécommunication incluant un agent logiciel vocal selon l'invention.
-La figure 2 un schéma-bloc d'un agent vocal selon la présente invention.

### Préambule et définitions

Bien que la technologie des agents logiciels ait fait l'objet de nombreuses publications dans le domaine de la recherche en télécommunications, il n'existe pas de consensus pour une définition claire de ce qu'est un agent logiciel. Le terme d'agent est utilisé aussi bien pour désigner des opérateurs humains spécialisés (par exemple les opérateurs chargés de traiter les appels arrivant dans un centre d'appels téléphoniques) qu'une catégorie de logiciels. Une définition s'impose donc.

Dans le cadre de cette demande de brevet et des revendications, nous appellerons agent logiciel tout programme ou partie de programme capable d'exécuter une tâche prédéfinie de manière autonome pour le compte d'un utilisateur, d'une application ou d'un autre agent, en fonction des droits qui lui ont été attribués. Un agent logiciel doit en outre être capable de communiquer, de coopérer et de coordonner ses activités avec le système dans lequel il est installé ou avec d'autres agents. Un agent logiciel est proactif, c'est-à-dire qu'il peut prendre lui-même l'initiative de communiquer avec son maître ou d'accomplir une tâche particulière. La plupart des agents logiciels sont en outre capables d'apprendre et d'adapter leur comportement futur en fonction de leurs expériences passées. Par opposition à la plupart des programmes informatiques qui sont exécutés puis arrêtés en attendant qu'on les appelle à nouveau, les agents logiciels sont généralement persistants, c'est-à-dire qu'ils sont en principe en permanence en mode d'exécution, quoique fréquemment en attente.

Un fonctionnement autonome signifie que l'agent logiciel n'a pas besoin d'être connecté en permanence avec son maître (utilisateur, application ou autre agent) pour effectuer la tâche qui lui a été confiée. Un agent logiciel peut recevoir une mission, se déconnecter du maître pendant qu'il l'exécute, puis se reconnecter lui-même lorsque la mission a été exécutée.

Beaucoup d'agents logiciels sont mobiles et peuvent ainsi se déplacer dans un réseau entre des systèmes distribués, éventuellement incompatibles; d'autres agents logiciels peuvent cependant être stationnaires.

Une définition de ce qu'est un agent logiciel est donnée par exemple en 1995 par M. Wooldridge et N. Jennings dans *"intelligent Agents: Theory and Practice".* S. Franklin et A. Graesser, dans les "Proceedings of the Third International Workshop on Agent Theories, Architectures, and Languages", Springer Verlag 1996, ont par ailleurs publié un article *"Is it an Agent, or just a Program?: A Taxonomy for Autonomous Agents"* qui explique la différence entre un agent logiciel et un programme. Le lecteur se référera utilement à ces deux publications en cas de doute sur la définition à donner à un agent logiciel.

Dans certains contextes, les agents logiciels sont aussi intitulés knowbots (pour knowledge-based robots), softbots (pour software robots), taskbots (task-based robots), userbots, etc.

Les agents logiciels sont souvent programmés au moyen d'un outil dédié, appelé "agent toolkit", qui permet au développeur de faciliter la mise au point des mécanismes de communication et de l'interface. AgentBuilder est un exemple de toolkit répandue. Les agents logiciels mobiles sont souvent programmés dans un langage orienté objet indépendant de la plate-forme informatique, par exemple Java ou CORBA, en XML (eXtensible Markup Language) ou dans un format de définition d'agents tel que ADF (Agent Definition Format)

Dans la présente demande, nous nous intéressons en particulier à une classe particulière d'agents logiciels, c'est-à-dire les agents logiciels vocaux. On appellera dans ce contexte agent logiciel vocal tout agent logiciel capable d'exécuter des fonctions de traitement de la voix, par exemple des fonctions de reconnaissance vocale, de reconnaissance ou de vérification d'appelant, de synthèse vocale, etc. Un agent logiciel vocal ne comporte toutefois pas nécessairement des routines pour exécuter ces tâches lui-même; il doit en revanche être capable de les déléguer à un autre agent ou programme, de manière à pouvoir mener à bien la mission qui lui a été confiée. Des agents logiciels vocaux ont déjà été décrits auquel leur propriétaire peut par exemple confier la mission de surveiller un événement sur le web (par exemple une cotation atteignant une valeur prédéfinie) et d'informer vocalement leur propriétaire lorsque l'événement se produit. Des systèmes ont aussi été proposés qui permettent à un utilisateur d'accéder à son e-mail ou à son agenda électronique en téléphonant à un agent logiciel vocal. Les agents logiciels vocaux peuvent aussi appeler leur propriétaire par téléphone pour les informer d'un événement. Les performances du système de reconnaissance vocale ont évolué au point de permettre actuellement à l'utilisateur de parler à son agent en langage naturel.

Les avantages de l'utilisation d'agents logiciels pour remplir des tâches dans un système de télécommunication sont multiples. Par rapport à des systèmes contrôlés de manière centrale par un programme, les agents sont plus simples à programmer et à faire évoluer. Chaque agent ne doit remplir qu'un nombre limité de fonctions nécessaires pour remplir sa mission, et se repose sur d'autres agents ou ressources pour résoudre des problèmes qu'il ne maîtrise pas lui-même. Les systèmes ainsi conçus sont plus robustes, puisque chaque agent peut être redondant.

### Exemple de réalisation

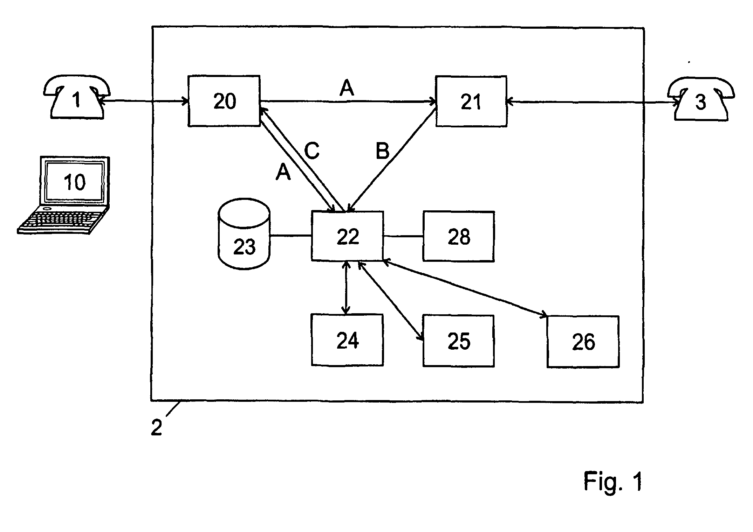

La figure 1 illustre un réseau de télécommunication vocal 2 permettant à plusieurs utilisateurs éloignés 1 et 3 d'établir une communication vocale. Dans l'exemple illustré, la communication est établie à l'instigation de l'utilisateur 1 qui souhaite se connecter à l'utilisateur 3. Des situations plus complexes peuvent être prévues dans le cadre de cette invention, notamment des appels en téléconférence impliquant un nombre d'utilisateurs supérieur à 2.

Le réseau de télécommunication 2 comprend un noeud initial 20, auquel l'utilisateur appelant 1 est raccordé, et un noeud final 21 près de l'utilisateur appelé 3.

Le réseau de télécommunication vocal peut être réalisé selon différentes architectures dans le cadre de cette invention.

Dans une première variante, le réseau 2 est un réseau à circuits commutés conventionnel, par exemple un réseau POTS (Plain Old Telephone Service), un réseau numérique à intégration de services (RNIS) ou un réseau mobile de type GSM ou UMTS par exemple. Le réseau est dans ce cas de préférence de type intelligent (IN) ou intelligent avancé (AIN) et comporte ainsi plusieurs points de commutation de services (SSP, Service Switching Points). Les noeuds initiaux et finaux 20, 21 sont dans ce cas constitués par deux SSP. Les SSP sont reliés par un lien SS7 à un point de contrôle de services (SCP, Service Control Point) non représenté qui leur indique comment traiter et router les appels reçus. Le réseau 2 permet de préférence aussi bien l'établissement de connections vocales point-à-point que de connections multipoints.

Dans une deuxième variante, le réseau de télécommunication vocal 2 permet aux utilisateurs 1, 3 de rester connectés en permanence avec le réseau. Des exemples de réseaux de ce type incluent par exemple les réseaux GPRS (General Packet Radio Service) ou de nombreux types de réseaux par paquets.

Dans une troisième variante, le réseau de télécommunication vocal 2 est de type TCP/IP et permet une transmission de voix par-dessus ce protocole. Ce type de solution est parfois appelé VolP (pour Voice over IP). Le noeud initial 20 peut dans ce cas être constitué par un serveur Internet du fournisseur d'accès Internet de l'utilisateur 1 (ISP, Internet Service Provider).

Le réseau de télécommunication 2 comprend par ailleurs au moins un agent logiciel vocal 22 constitué par un logiciel obéissant à la définition donnée ci-dessus. L'agent logiciel vocal 22 est mémorisé et exécuté dans un système informatique de traitement de données connecté au réseau de télécommunication vocal 2, par exemple dans un serveur VoiceXML, ou réparti dans un ensemble de serveurs dans l'infrastructure du réseau. Dans une variante préférentielle de l'invention, l'agent logiciel vocal 22 est personnel à l'utilisateur 1 et logé avec d'autres agents d'autres utilisateurs dans un serveur dédié à cette application et lié à l'infrastructure du réseau de télécommunication. Le serveur peut par exemple être géré par l'opérateur du réseau de télécommunication et être constitué par un ordinateur polyvalent muni d'une interface CTI (Computer Telephony Integration) lui permettant d'établir des connexions avec un ou plusieurs interlocuteurs, de répondre à des appels ou d'interrompre des connexions dans un réseau de télécommunication vocal.

L'agent logiciel vocal 22 peut communiquer et coopérer avec une pluralité d'autres agents logiciels 24, 25, 26 logés dans le même serveur ou dans des serveurs connectés. Il peut en outre accéder à une banque de données 23 contenant le profil de l'utilisateur 1, par exemple ses préférences, ses modèles de voix et/ou de langage utilisés pour la reconnaissance vocale, différents paramètres, etc.

La banque de données 23 peut aussi contenir des informations confidentielles (secrets) permettant à l'agent logiciel vocal d'effectuer des transactions commerciales ou financières au nom de son maître, par exemple des numéros de carte de crédit ou de compte bancaire, des clés électroniques publiques et/ou privées permettant de signer ou de vérifier le signature de documents électroniques, ou n'importe quel secret permettant d'effectuer des transactions ou d'authentifier l'agent pour une transaction. L'accès à ces secrets est de préférence libéré uniquement lorsque l'identité du propriétaire de l'agent a été vérifiée avec une sécurité supérieure à un seuil prédéfini, par exemple au moyen d'un algorithme de vérification d'identité par la voix indiquant le niveau de confianceatteint.

Certains autres agents 24-26 peuvent aussi être connectés à la même banque de données de profils 23 ou à une autre banque de données.

L'agent logiciel 22 utilise un système de traitement de parole 28 capable d'exécuter des fonctions de traitement de la voix. Le système de traitement de parole 28 est de préférence capable d'effectuer toutes ou une partie des opérations suivantes:
■ analyse vocale, pour interpréter des requêtes et des instructions contenues dans un flux de parole reçu.
■ vérification d'appelant, pour vérifier l'identité de la personne qui parle à l'aide des caractéristiques de sa voix (empreinte vocale).
■ conversion de voix en texte.
■ restitution de contenu audio enregistré sous la forme de flux audionumériques.
■ synthèse vocale ou conversion de texte en voix. Le texte peut être mémorisé ou généré par un gestionnaire de dialogue.

L'agent logiciel vocal 22 n'exécute toutefois pas nécessairement toutes ces fonctions lui-même; il doit en revanche au moins être capable de les déléguer à un autre agent ou programme 28, de manière à pouvoir mener à bien la mission qui lui a été confiée.

L'agent logiciel vocal est connecté avec le point initial 20 ou avec un autre point de commutation entre l'appelant 1 et l'appelé 3, de manière à pouvoir recevoir le flux de données vocales A de l'appelant 1. Dans une variante, l'agent logiciel vocal 22 est logé directement dans un des noeuds 20, 21 ou dans un noeud intermédiaire par lequel transitent les données vocales. Dans le cas d'un réseau TCP/IP l'agent logiciel vocal peut être logé dans un serveur VoiceXML auquel ces données vocales sont transmises par un lien TCP/IP. Dans un réseau à commutation de circuit l'agent 22 peut être installé dans un équipement de téléconférence multipoint.

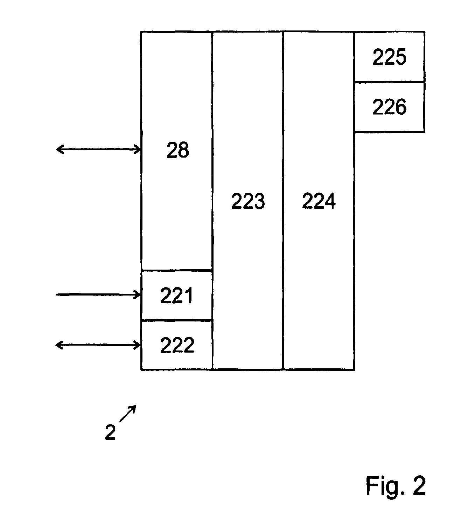

La figure 2 est un schéma-bloc qui illustre schématiquement les fonctions assumées par l'agent logiciel vocal 22. L'agent 22 comporte ou utilise un module de traitement de voix 28 (déjà évoqué). Le module 28 peut être réalisé à l'aide de technologies conventionnelles dans le domaine du traitement de la voix, par exemple à l'aide de modèles de Markov cachés (HMMs, Hidden Markok Models) ou de réseaux neuronaux. L'analyse de voix est de préférence dépendante de l'utilisateur et utilise des modèles de voix et/ou des modèles de langage stockés dans la banque de données de profils et de modèles 23. Le système est de préférence adaptatif et permet d'améliorer la qualité des modèles de voix au cours d'une session d'entraînement initial, puis ultérieurement lors de chaque utilisation.

L'agent logiciel vocal 22 comprend ou utilise de préférence un module de reconnaissance de codes DTMF (Dual Tone Multi-Frequency) afin de détecter lorsque l'utilisateur presse les touches de son équipement terminal. Le module de reconnaissance de codes DTMF peut aussi être intégré au système d'analyse de voix 28.

L'agent comporte par ailleurs un module de communication 222 lui permettant de communiquer avec son environnement et notamment avec d'autres agents 24, 25, 26 afin de remplir la mission qui lui est confiée dans cet environnement. Le module de communication peut être constitué par une simple passerelle TCP/IP.

Un interpréteur de commandes 223 interprète les commandes vocales ou DTMF ainsi que les messages provenant de l'environnement de l'agent. Le module 223 permet également de générer des réponses vocales ou des réactions dans cet environnement en fonction de l'état de l'agent. L'agent logiciel vocal 22 permet ainsi d'agir sur son environnement. L'état de l'agent est déterminé par une machine à états 224, constituée par un programme logiciel. Une ou plusieurs applications logicielles 225-226 sont exécutées selon l'état de la machine 224 afin de fournir le service requis par l'utilisateur ou l'environnement de l'agent logiciel.

Une session vocale est de préférence établie entre l'utilisateur 1 et son agent logiciel vocal 22 dès que le terminal vocal est en ligne, par exemple dès que l'utilisateur a décroché le téléphone. Cette fonction est par exemple disponible dans les réseaux de type ISDN sous le nom "hot line capability". Une communication multipoint est alors établie entre l'utilisateur appelant 1, le ou les utilisateurs appelés 3 et l'agent logiciel vocal 22. Dans une variante, mise en oeuvre par exemple lorsque l'utilisateur appelle depuis un terminal autre que le sien, la communication n'est pas établie automatiquement avec l'agent logiciel vocal: l'utilisateur doit tout d'abord appeler cet agent en composant son numéro ou en sélectionnant son adresse électronique.

L'agent logiciel vocal peut aussi être disponible ou activé pour traiter les appels entrants. Il est possible par exemple d'avoir un agent vocal 22 qui accueille les appels entrants, vérifie dans l'agenda du propriétaire 1 de l'agent si celui-ci est présent, et le cas échéant établit la connexion entre l'appelant 3 et le propriétaire 1 de l'agent. En cas d'absence, l'agent logiciel vocal peut dévier l'appel, par exemple sur une boîte vocale.

Dans le cas d'un équipement terminal d'utilisateur qui reste en permanence en ligne, par exemple un terminal GPRS ou Internet, l'agent logiciel 25 peut communiquer avec cet équipement au travers d'un lien de données même lorsque aucune connexion vocale n'est établie.

Dans le cas d'un réseau à commutation de paquets, par exemple un réseau VolP, les paquets de voix A de l'utilisateur 1 sont envoyés simultanément (multicast) à l'utilisateur appelé 3 et à l'agent logiciel vocal 22. L'agent logiciel vocal convertit ces paquets en texte ou en instructions et détermine son état et sa mission en fonction des instructions reçues. Les paquets vocaux B qui reviennent depuis l'utilisateur appelé 3 sont envoyés à l'agent logiciel vocal 22 qui les mixe avec ses propres réponses. Le signal mixé C comprenant les réponses de l'utilisateur 3 et celles de l'agent 22 sont transmises à l'utilisateur 1. Afin de réduire le délai de transmission, l'agent logiciel vocal peut aussi transmettre les réponses B de l'utilisateur appelé directement, c'est-à-dire sans les analyser, lorsque l'agent logiciel ne parle pas.

Le noeud initial 20 et/ou le terminal de l'utilisateur 1 peuvent comporter un système de suppression d'écho pour éviter que les réponses de l'agent ne parviennent à l'utilisateur appelé 3. De cette manière, seul le propriétaire de l'agent logiciel est capable d'entendre la voix de son agent logiciel vocal. Selon l'application ou le service fourni par l'agent logiciel vocal, il est également possible d'envoyer les réponses de l'agent logiciel vocal à l'utilisateur appelé 3 ou à n'importe quel autre utilisateur connecté au réseau de télécommunication 2. Il est par exemple possible d'établir une conférence audio complète entre les utilisateurs 1,3 et l'agent logiciel vocal 22 qui participe à la communication.

L'utilisateur peut de préférence se connecter par Internet au serveur informatique hébergeant son agent logiciel 22 afin d'installer un nouvel agent logiciel vocal ou de paramétrer ou personnaliser un agent déjà installé. Le chargement se fait par exemple à l'aide d'un navigateur fonctionnant sur un terminal informatique 10 de l'utilisateur et permettant d'accéder à une page de contrôle et d'installation d'agents logiciels vocaux. Le paramétrage et l'installation d'agents logiciels vocaux peut aussi être effectué au travers d'une page WML (Wireless Markup Language) accessible au moyen d'un terminal WAP (Wireless Application Protocol), et/ou à l'aide de commandes vocales au travers du réseau de télécommunication vocal 2.

L'agent logiciel vocal 22 peut fonctionner selon deux modes distincts. En mode activé l'agent logiciel vocal participe à la conversation. En mode d'écoute, l'agent logiciel vocal analyse les commandes vocales A reçues de l'utilisateur appelant 1 mais ne participe pas à la conversation. L'agent logiciel vocal 22 peut toutefois également s'accomplir de sa mission et exécuter des applications pour le compte de l'utilisateur 1 lorsqu'il est en mode d'écoute. Il s'abstiendra cependant de se mêler à une conversation avant d'être activé.

L'activation et la désactivation d'un agent logiciel vocal peuvent être effectuées de différentes manières:
■ A l'aide d'une commande vocale ou d'un signal DTMF. Si plusieurs agents logiciels vocaux écoutent, la commande doit de préférence se référer spécifiquement à l'agent logiciel concerné, par exemple en indiquant le nom de cet agent dans la commande.
   Afin de les distinguer plus aisément au sein du dialogue entre plusieurs interlocuteurs, les commandes d'activation d'un agent sont de préférence toujours précédées par une instruction prédéfinie, par exemple par le nom de l'agent.
■ Dans le cas d'une communication multimodale, c'est-à-dire lorsque l'utilisateur est connecté à l'agent 22 simultanément par le biais du réseau de télécommunication vocal 2 et par le réseau Internet, l'agent peut être activé au moyen d'une page d'accès WEB. Un feedback visuel est préférence fourni afin d'améliorer la convivialité du service. Cette variante a l'avantage d'être transparente pour l'utilisateur appelé 3 qui n'entend pas les interactions entre l'utilisateur 1 et son agent. Elle est particulièrement appropriée pour les utilisateurs professionnels du téléphone, par exemple les téléphonistes ou le personnel de centres d'appel.
■ L'agent logiciel peut aussi être activé par des événements liés à son environnement, par exemple un message d'alarme provenant d'un autre agent, un message arrivant dans une boîte aux lettres électronique de l'utilisateur 1, etc...

Au moins un agent logiciel vocal est par ailleurs de préférence activé lors de l'établissement de la communication. Il peut servir à ce moment d'assistant personnel numérique pour l'établissement de la communication avec l'utilisateur appelé 3.

L'agent logiciel vocal 22 peut exécuter un certain nombre de fonctions définies par les applications 225-226. Certaines fonctions peuvent être démarrées par défaut lors de l'activation de l'agent ou lors de l'établissement d'une communication. Les fonctions démarrées par défaut peuvent dépendre de l'interlocuteur appelé, par exemple de la région dans laquelle il se trouve, de sa langue, de l'historique des appels entre les deux interlocuteurs, etc. D'autres fonctions doivent être démarrées explicitement par exemple en prononçant une commande vocale, en tapant un code DTMF ou via Internet.

Nous allons maintenant décrire, à titre d'exemples non limitatifs, quelques fonctions ou applications pouvant être mises en oeuvre à l'aide d'agents logiciels selon l'invention. Ces fonctions peuvent être mises en oeuvre par un seul agent logiciel vocal polyvalent. Afin d'améliorer l'ergonomie du système et de faciliter la programmation des agents, plusieurs agents spécialisés et coopérant entre eux peuvent aussi être employés. Chaque agent peut être identifié par un nom et possède une voix et des caractéristiques d'interface vocale qui le rendent identifiable facilement.

### 1. Agent d'archivage de communications

■ Archivage de la communication vocale dans un espace mémoire approprié, pour accès ultérieur par téléphone ou via Internet.
■ Vérification de l'identité de l'utilisateur 1, et de ses droits à utiliser l'agent logiciel vocal 1 ou certains services de cet agent. La vérification peut utiliser par exemple des méthodes de vérification basées sur la voix.
■ Authentification des différents interlocuteurs 1,3, et indication du nom des interlocuteurs dans le fichier d'archive de la communication.
■ Transcription de la communication vocale en texte, annotation de cette transcription avec la date, l'heure et les coordonnées des interlocuteurs.
■ Envoi par e-mail à une adresse arbitraire de la communication vocale sous forme de fichier son ou transcrit en texte. Envoi par fax à un numéro arbitraire de la transcription en texte de la conversation.
■ Archivage indépendant des différents interlocuteurs, par exemple en cas de conférence audio.
■ Détection du langage employé par chaque interlocuteur pour l'archivage.
■ Fonctions de recherche pour retrouver et restituer une communications archivée.
■ Fonctions d'organisation de la banque de données de communications archivées.
■ Etc.

### 2. Fonctions de communication

■ Etablissement d'une communication avec un interlocuteur spécifié.
■ Accueil vocal et traitement des appels reçus.
■ Déviation d'appels reçus.
■ Service de boîte vocale pour enregistrer les appels reçus en absence sous forme de fichier vocal ou transcrit en mode texte.
■ Ajouter un interlocuteur supplémentaire dans une communication déjà établie.
■ Supprimer un interlocuteur d'une communication établie.
■ Mettre une personne en mode silence ou en mode de maintien de la conversation ("on hold")
■ Réactiver une personne en mode silence ou "on hold".
■ Etc.

### 3. Fonctions de transaction électroniques

■ Recherche automatique d'offres ou de prestations sur le réseau Web selon des critères de recherche communiqués oralement.
■ Passer des commandes sur Internet ou effectuer des transactions sur le Web au nom du maître de l'agent.
■ Effectuer des transactions en établissant une communication vocale, ou en envoyant un téléfax ou un e-mail à un fournisseur ou un client.
■ Débiter une carte de crédit du maître de l'argent, ou débiter un compte bancaire, postal ou électronique, ou un compte prépayé ou postpayé auprès de l'opérateur du réseau de télécommunications, en fonction de la transaction effectuée.
■ Etc.

### 4. Fonction d'assistant virtuel

■ Activation d'une session web, permettant par exemple de visualiser la transcription voix-texte au fur et à mesure de la conversation.
■ Avertissement en cas d'événements détectés dans l'environnement de l'agent, soit au début d'une conversation, ou au milieu de la conversation selon la priorité associée à l'événement.
■ Fonctions d'agenda. Recherche, ajout, et organisation d'événements, de rendez-vous et de contacts. L'agent logiciel peut appeler l'utilisateur 1 de lui-même lorsque certaines conditions définies dans l'agenda sont réunies.
■ Assistant calculateur. L'agent logiciel peut démarrer n'importe quel programme informatique, par exemple une calculette électronique pour effectuer des calculs pendant la conversation.
■ Accès à des informations, par exemple des informations stockées dans une banque de données ou sur le web.
■ Aide à la traduction, pour traduire des mots ou des phrases.
■ Jeux, loteries, plaisanterie du jour, horoscope
■ Assistance aux enchères entre un groupe de personnes
■ Etc.

Un utilisateur 1 peut recourir à plusieurs agents logiciels vocaux spécialisés, pouvant également communiquer entre eux. Afin d'améliorer l'ergonomie du système, chacun de ces agents peut être nommé et synthétiser une voix différente.

Un exemple de communication vocale entre l'utilisateur 1 (John) et l'utilisateur 2 (George), faisant intervenir trois agents logiciels vocaux, est illustré à l'aide du tableau 1.

| Utilisateur 1 (John) | Utilisateur 2 (George) | Agents logiciels vocaux de John Peter: agent d'assistance Bob: agent de connexion Sam: agent d'archivage |
|---|---|---|
| John décroche le combiné et a l'intention d'appeler Mary | | Les agents sont en mode d'écoute (par défaut). Sam est prêt à archiver, Bob écoute et Peter a un événement à signaler |
| | | Peter (agent d'assistance): *"John, George a laissé un message vocal, veux-tu l'écouter?"* |
| John change d'avis et décide d'écouter le message vocal de George: *"Oui"* | | |
| | | Peter (Message de George): c *" Bonjour John, si tu as du temps à 12:30 je voudrais discuter un projet avec toi. "* |
| "Merci Peter" | | Peter est désactivé par cette commande et se met en mode d'écoute |
| "Bob, appele George" | | Bob est activé et établit une communication vocale entre John et George |
| | | Bob est automatiquement désactivé. |
| | "Hallo, ici George" | |
| *"Salut George, peut-on se rencontrer à 12:30 avec Mary au bar du campus?"* | | |
| | *"Pour moi* c'est *OK"* | |
| *"George, je vais demander à mon agent de connexion Bob si Mary est atteignable. Bob appelle Mary et vérifie son agenda aujourd'hui à 12:30.* " | | |
| | | Bob est activé et essaie d'établir une connexion avec Mary, mais sans succès. Bob communique avec Sam pour vérifier si un compte-rendu de la présente conversation est disponible. La réponse est oui. Bob demande en outre à Peter si l'agenda de Mary est libre à 12:30. Les deux agents répondent positivement. Bob suggère à John: *"Je n'arrive pas à atteindre Mary, est-ce que je dois lui envoyer un e-mail de la discussion et réserver le rendez-vous dans son agenda ?"* |
| *"Oui Bob" "Merci Bob"* | | Bob accomplit sa mission et se désactive. |
| *"George, il n'est pas sûr que Mary pourra nous rejoindre, nous verrons! A bientôt"* | | |
| | *A bientôt!* | Sam ferme l'archive de la discussion |

L'homme du métier comprendra que le type et le nombre de services pouvant être offert au moyen d'un système multi-agents n'est pas limité aux exemples donnés ci-dessus. Des agents logiciels vocaux supplémentaires ou de nouvelles fonctions pour des agents existant peuvent être commercialisés par des sociétés tiers sous la forme d'un support de données informatique, par exemple sous la forme de disque ou cd-rom ou données téléchargeables depuis un réseau, et installés dans un serveur dans l'infrastructure du réseau de télécommunication vocal 2, ou dans un serveur lié à ce réseau.

## Revendications

1. Méthode permettant d'offrir un ensemble de services personnalisables à un utilisateur (1) dans un réseau de télécommunication vocal (2), comprenant:
mise à disposition dudit utilisateur d'au moins un agent logiciel vocal personnel (22) pour lui fournir au moins un service, lesdits agents logiciels vocaux personnels (22) étant logés dans un ou plusieurs ordinateurs dans l'infrastructure dudit réseau de télécommunications vocal lesdits agents logiciels vocaux personnels utilisant un système d'analyse de voix (28) permettant audit utilisateur (1) de les commander au moyen de commandes vocales au travers dudit réseau de télécornmunication vocal ledit ordinateur étant un serveur,
commande de l'activation dudit service au moyen de commandes vocales prononcées par ledit utilisateur (1) pendant la partie conversationnelle d'une communication avec un autre utilisateur (3) dudit réseau de télécommunication vocal (2),
**caractérisé par** une étape au cours de laquelle ledit utilisateur (1) se connecte par Internet audit serveur afin d'installer un nouvel agent logiciel vocal personnel dans l'infrastructure dudit réseau de télécommunication (2) ou de paramétrer un agent logiciel vocal personnel déjà installé.

2. Méthode selon la revendication 1, dans laquelle ledit agent logiciel vocal personnel est autonome, persistant, capable d'intervenir de lui-même dans la conversation et d'adapter de lui-même son comportement.

3. Méthode selon l'une des revendications 1 ou 2, dans laquelle une conférence audio est établie au travers dudit réseau de tétécommunication vocal entre lesdits utilisateurs (1, 3) et ledit agent logiciel vocal personnel (22).

4. Méthode selon l'une des revendications 1 à 3, dans laquelle plusieurs agents logiciels vocaux personnels distincts (22,24,25,26) sont mis à disposition d'au moins certains utilisateurs.

5. Méthode selon la revendication 4, dans laquelle au moins certains desdits agents logiciels vocaux personnels (22,24,25,26) mis à disposition d'un utilisateur coopèrent pour se déléguer des tâches.

6. Méthode selon l'une des revendications 1 à 5, dans laquelle au moins certains desdits agents logiciels vocaux personnels (22) sont installés dans l'infrastructure dudit réseau de télécommunication vocal (2) par l'utilisateur (1) lui-même.

7. Méthode selon la revendication 6, dans laquelle au moins certains desdits agents logiciels vocaux (22) sont installés dans l'infrastructure dudit réseau de télécommunication vocal (2) au moyen de commandes vocales.

8. Méthode selon l'une des revendications 1 à 7, comprenant une étape de personnalisation du comportement d'au moins certains desdits agents logiciels vocaux personnels (22) par ledit utilisateur (1).

9. Méthode selon la revendication 8, dans laquelle le personnels comportement d'au moins certains desdits agents logiciels vocaux personnels (22) est personnalisé au moyen de commandes vocales.

10. Méthode selon l'une des revendications 1 à 9, dans laquelle le comportement par défaut d'au moins un agent logiciel vocal personnel (22) dépend de l'interlocuteur appelé (3).

11. Méthode selon l'une des revendications 1 à 10, dans laquelle ledit système d'analyse de voix (28) effectue une analyse de voix dépendant de l'utilisateur et basée sur des modèles de voix et/ou de langage (23) mémorisés dans l'infrastructure du réseau de télécommunication vocal.

12. Méthode selon l'une des revendications 1 à 11, dans laquelle les communications établies par ledit utilisateur (1) sont routées par ledit agent logiciel vocal personnel (22).

13. Méthode selon l'une des revendications 1 à 11, dans laquelle les communications établies par ledit utilisateur (1) sont transportées par paquets audit autre utilisateur (3),
une copie desdits paquets étant envoyée en multicast audit agent logiciel vocal personnel (22).

14. Méthode selon l'une des revendications 1 à 11, dans laquelle l'utilisateur est connecté audit agent logiciel vocal personnel (22) dès qu'il se connecte dans ledit réseau de télécommunication vocal.

15. Méthode selon l'une des revendications 1 à 11, comprenant une étape préalable au cours de laquelle ledit utilisateur compose un numéro dédié pour se connecter à son agent logiciel vocal personnel (22).

16. Méthode selon l'une des revendications 1 à 11, dans laquelle l'utilisateur est connecté en permanence dans ledit réseau de télécommunication vocal, ledit agent logiciel vocal personnel (22) surveillant en permanence la connexion.

17. Méthode selon l'une des revendications 1 à 16, dans laquelle ledit agent logiciel vocal personnel possède deux modes de fonctionnement distincts: un mode activé, dans lequel il peut participer à une conversation, et un mode d'écoute dans lequel il ne peut pas participer à une conversation.

18. Méthode selon la revendication 17, comprenant une étape de changement de mode dudit agent logiciel vocal personnel au moyen d'une commande vocale dudit utilisateur.

19. Méthode selon la revendication 17 comprenant une étape de changement de mode dudit agent logiciel vocal personnel au moyen d'une commande DTMF dudit utilisateur.

20. Méthode selon la revendication 17, comprenant une étape de changement de mode dudit agent logiciel vocal personnel activé par un événement détecté par ledit agent logiciel vocal personnel.

21. Méthode selon la revendication 17, comprenant une étape de changement de mode dudit agent logiciel vocal personnel activé par l'intermédiaire d'une commande web.

22. Méthode selon la revendication 17, dans laquelle ledit mode activé est sélectionné lors de l'établissement de la connexion.

23. Méthode selon l'une des revendications 1 à 22, comprenant une étape de vérification des droits de l'utilisateur à utiliser ledit agent logiciel vocal personnel (22) basée sur l'empreinte vocale dudit utilisateur.

24. Méthode selon l'une des revendications 1 à 23, comprenant une étape dans laquelle ledit agent logiciel vocal personnel (22) archive un enregistrement d'au moins une partie de ladite conversation dans un espace mémoire.

25. Méthode selon l'une des revendications 1 à 24, comprenant une étape dans laquelle ledit agent logiciel vocal personnel (22) convertit en texte au moins une partie de ladite conversation pour l'archiver ou pour l'envoyer par e-mail.

26. Méthode selon la revendication 25, dans laquelle ledit agent logiciel vocal personnel archive les interventions des différents interlocuteurs.

27. Méthode selon l'une des revendications 1 à 26, comprenant une étape au cours de laquelle ledit agent logiciel vocal personnel ajoute un interlocuteur supplémentaire dans une communication établie.

28. Méthode selon l'une des revendications 1 à 27, comprenant une étape au cours de laquelle ledit agent logiciel vocal personnel supprime un interlocuteur dans une communication établie.

29. Méthode selon l'une des revendications 1 à 28, comprenant une étape au cours de laquelle ledit agent logiciel vocal personnel accède à des informations sur le web ou dans une banque de données et restitue oralement les informations trouvées.

30. Méthode selon l'une des revendications 1 à 29, comprenant une étape au cours de laquelle ledit agent logiciel vocal personnel accède à un agenda électronique dudit utilisateur.

31. Méthode selon l'une des revendications 1 à 30, comprenant une étape au cours de laquelle ledit agent logiciel vocal personnel effectue une transaction financière et/ou commerciale pour le compte dudit utilisateur.

32. Méthode selon la revendication 31, comprenant une étape au cours de laquelle ledit agent logiciel vocal personnel débite un compte ou une carte de crédit dudit utilisateur pour conclure ladite transaction, ledit agent logiciel vocal personnel disposant des numéros et des indications nécessaires pour procéder à ce débit sans que ledit utilisateur ne doive les communiquer.

33. Système informatique de traitement de données destiné à être connecté à un réseau de télécommunications vocal (2) et dans lequel au mois un agent logiciel vocal personnel (22) est mémorisé, lesdits agents logiciels vocaux personnels utilisant un système d'analyse vocal (28) permettant aux utilisateurs dudit réseau de télécommunication vocal de les commander au moyen de commandes vocales au travers dudit réseau de télécommunication vocal, chacun desdits agents logiciels vocaux personnels étant associé personnellement à un desdits utilisateurs ou à un groupe limité d'utilisateurs, lesdits agents logiciels vocaux personnels permettant de commander l'activation de services personnalisables au moyen de commandes vocales échangées pendant la partie conversationnelle d'une communication entre deux utilisateurs dudit réseau de télécommunication vocal,
**caractérisé par** des moyens pour permettre auxdits utilisateurs, au travers du réseau Internet, d'installer un nouvel agent logiciel vocal personnel dans ledit système ou de paramétrer un agent logiciel vocal personnel déjà installé.

34. Système de télécommunication comprenant un agent logiciel vocal personnel (22) participant à une conférence audio avec plusieurs utilisateurs (1, 2) dans un réseau de télécommunication vocal pour offrir des services à valeur ajoutée à au moins un desdits utilisateurs pendant la partie conversationnelle d'une communication, **caractérisé en ce que** ledit agent logiciel vocal personnel (22) est installé par un dit utilisateur au travers du réseau Internet dans l'infrastructure dudit réseau de télécommunication vocal et affecté à un seul desdits utilisateurs.

## Patentansprüche

1. Verfahren, um personalisierbare Dienste einem Benutzer (1) in einem Sprachtelekommunikationsnetzwerk (2) anzubieten, mit:
dem Benutzer mindestens einen persönlichen Sprachsoftwareagent (22) zur Verfügung stellen, um ihm mindestens einen Dienst anzubieten, wobei die benannten persönlichen Sprachsoftwareagenten (22) in einem oder mehreren Computern in der Infrastruktur des benannten Sprachtelekommunikationsnetzwerks untergebracht sind, wobei die benannten persönlichen Sprachsoftwareagenten ein Sprachanalysesystem (28) verwenden, welches dem benannten Benutzer (1) erlaubt, sie mittels Sprachbefehlen über das benannte Sprachtelekommunikationsnetzwerk zu steuern, wobei der benannte Computer ein Server ist,
die Aktivierung des benannten Dienstes mittels vom benannten Benutzer (1) gesprochenen Sprachbefehlen während dem Konversationsteil einer Kommunikation mit einem anderen Benutzer (3) des gesagten Sprachtelekommunikationsnetzwerkes (2) zu befehlen,
**gekennzeichnet durch** einen Schritt, während dem der benannte Benutzer (1) sich über Internet mit dem benannten Server verbindet, um einen neuen persönlichen Sprachsoftwareagenten in der Infrastruktur des benannten Telekommunikationsnetzwerkes (2) zu installieren oder um einen schon installierten persönlichen Sprachsoftwareagenten zu parametrieren.

2. Verfahren gemäss Anspruch 1, worin der benannte persönliche Sprachsoftwareagent autonom, persistent und fähig ist, von sich aus im Gespräch zu intervenieren und selber sein Verhalten anzupassen.

3. Verfahren gemäss einem der Ansprüche 1 oder 2, worin eine Audiokonferenz über das benannte Sprachtelekommunikationsnetzwerk zwischen den benannten Benutzern (1, 3) und dem benannten persönlichen Sprachsoftwareagenten (22) hergestellt wird.

4. Verfahren gemäss einem der Ansprüche 1 bis 3, worin mehrere separate persönliche Sprachsoftwareagenten (22,24,25,26) mindestens einigen Benutzern zur Verfügung gestellt werden.

5. Verfahren gemäss Anspruch 4, worin mindestens einige der benannten mindestens einem Benutzer zur Verfügung gestellten persönlichen Sprachsoftwareagenten (22,24,25,26) zusammen arbeiten, um sich Aufgaben zu delegieren.

6. Verfahren gemäss einem der Ansprüche 1 bis 5, worin mindestens einige der persönlichen Sprachsoftwareagenten (22,24,25,26) in der Infrastruktur des benannten Sprachtelekommunikationsnetzwerks (2) vom Benutzer (1) selber installiert werden.

7. Verfahren gemäss Anspruch 6, worin mindestens einige der benannten persönlichen Sprachsoftwareagenten (22) in der Infrastruktur des benannten Sprachtelekommunikationsnetzwerks (2) mittels Sprachbefehlen installiert werden.

8. Verfahren gemäss einem der Ansprüche 1 bis 7, mit einem Schritt der Personalisierung des Verhaltens von mindestens einigen der benannten persönlichen Sprachsoftwareagenten (22) durch den benannten Benutzer (1).

9. Verfahren gemäss Anspruch 8, worin das Verhalten von mindestens einigen der benannten persönlichen Sprachsoftwareagenten (22) mittels Sprachbefehlen personalisiert wird.

10. Verfahren gemäss einem der Ansprüche 1 bis 9, worin das standardmässig eingestellte Verhalten von mindestens einem persönlichen Sprachsoftwareagenten (22) vom angerufenen Teilnehmer (3) abhängt.

11. Verfahren gemäss einem der Ansprüche 1 bis 10, worin das benannte Sprachanalysesystem (28) eine Sprachanalyse durchführt, welche vom Benutzer abhängig ist und auf in der Infrastruktur des Sprachtelekommunikationsnetzwerks gespeicherten Stimm- und/oder Sprachmodellen (23) basiert.

12. Verfahren gemäss einem der Ansprüche 1 bis 11, worin die vom benannten Benutzer (1) hergestellten Kommunikationen durch den benannten persönlichen Sprachsoftwareagenten (22) geroutet werden.

13. Verfahren gemäss einem der Ansprüche 1 bis 11, worin die vom benannten Benutzer (1) hergestellten Kommunikationen als Pakete an den benannten anderen Benutzer (3) transportiert werden,
wobei eine Kopie der besagten Pakete in Multicast an den benannten persönlichen Sprachsoftwareagenten (22) gesandt wird.

14. Verfahren gemäss einem der Ansprüche 1 bis 11, worin der Benutzer mit dem benannten persönlichen Sprachsoftwareagenten (22) verbunden wird, sobald er sich im benannten Sprachtelekommunikationsnetzwerk verbindet.

15. Verfahren gemäss einem der Ansprüche 1 bis 11, mit einem vorherigen Schritt, während dem der benannte Benutzer eine dedizierte Nummer wählt, um sich mit seinem persönlichen Sprachsoftwareagenten (22) zu verbinden.

16. Verfahren gemäss einem der Ansprüche 1 bis 11, worin der Benutzer durchgehend im benannten Sprachtelekommunikationsnetzwerk verbunden ist, wobei der benannte persönliche Sprachsoftwareagent (22) die Verbindung durchgehend überwacht.

17. Verfahren gemäss einem der Ansprüche 1 bis 16, worin der benannte persönliche Sprachsoftwareagent zwei unterschiedliche Operationsmodi aufweist: einen aktivierten Modus, in welchem er an einem Gespräch teilnehmen kann, und einen Zuhörmodus, in welchem er an einem Gespräch nicht teilnehmen kann.

18. Verfahren gemäss Anspruch 17, mit einem Schritt von Moduswechsel des benannten persönlichen Sprachsoftwareagenten mittels eines Sprachbefehls des benannten Benutzers.

19. Verfahren gemäss Anspruch 17, mit einem Schritt von Moduswechsel des benannten persönlichen Sprachsoftwareagenten mittels eines DTMF-Befehls des benannten Benutzers.

20. Verfahren gemäss Anspruch 17, mit einem Schritt von Moduswechsel des benannten persönlichen Sprachsoftwareagenten, der durch ein vom benannten persönlichen Sprachsoftwareagenten erkanntes Ereignis aktiviert wird.

21. Verfahren gemäss Anspruch 17, mit einem Schritt von Moduswechsel des benannten persönlichen Sprachsoftwareagenten, der durch einen Web-Befehl aktiviert wird.

22. Verfahren gemäss Anspruch 17, worin der besagte aktivierte Modus während der Herstellung der Verbindung ausgewählt wird.

23. Verfahren gemäss einem der Ansprüche 1 bis 22, mit einem Schritt von Überprüfung der Rechte des Benutzers, den benannten persönlichen Sprachsoftwareagenten (22) zu benutzen, auf der Basis der Stimmabdrücke des benannten Benutzers.

24. Verfahren gemäss einem der Ansprüche 1 bis 23, mit einem Schritt, während dem der benannte persönliche Sprachsoftwareagent (22) eine Aufnahme von mindestens einem Teil des benannten Gesprächs in einem Speicherteil archiviert.

25. Verfahren gemäss einem der Ansprüche 1 bis 24, mit einem Schritt, während dem der benannte persönliche Sprachsoftwareagent (22) mindestens einen Teil des benannten Gesprächs als Text konvertiert, um ihn zu speichern oder per E-Mail zu senden.

26. Verfahren gemäss Anspruch 25, worin der benannte persönliche Sprachsoftwareagent die Interventionen der verschiedenen Teilnehmer archiviert.

27. Verfahren gemäss einem der Ansprüche 1 bis 26, mit einem Schritt, während dem der benannte persönliche Sprachsoftwareagent einen zusätzlichen Teilnehmer in eine hergestellte Kommunikation zufügt.

28. Verfahren gemäss einem der Ansprüche 1 bis 27, mit einem Schritt während dem der benannte persönliche Sprachsoftwareagent einen Teilnehmer in einer hergestellten Kommunikation ausschliesst.

29. Verfahren gemäss einem der Ansprüche 1 bis 28, mit einem Schritt, während dem der benannte persönliche Sprachsoftwareagent auf Informationen auf dem Web oder in einer Datenbank zugreift und die gefundenen Informationen mündlich wiedergibt.

30. Verfahren gemäss einem der Ansprüche 1 bis 29, mit einem Schritt, während dem der benannte persönliche Sprachsoftwareagent auf eine elektronische Agenda des benannten Benutzers zugreift.

31. Verfahren gemäss einem der Ansprüche 1 bis 30, mit einem Schritt, während dem der benannte persönliche Sprachsoftwareagent eine finanzielle und/oder kommerzielle Transaktion im Auftrag des benannten Benutzers durchführt.

32. Verfahren gemäss Anspruch 31, mit einem Schritt, während dem der benannte persönliche Sprachsoftwareagent ein Konto oder eine Kreditkarte des benannten Benutzers belastet, um die benannte Transaktion abzuschliessen, wobei der benannte persönliche Sprachsoftwareagent über die nötigen Nummern und Angaben verfügt, um diese Belastung durchzuführen, ohne dass der benannte Benutzer sie mitteilen muss.

33. Datenverarbeitungscomputersystem, dazu bestimmt, mit einem Sprachtelekommunikationsnetzwerk (2) verbunden zu werden und worin mindestens ein persönlicher Sprachsoftwareagent (22) gespeichert ist, wobei die benannten persönlichen Sprachsoftwareagenten ein Sprachanalysesystem (28) verwenden, das den Benutzern des benannten Sprachtelekommunikationsnetzwerks erlaubt, sie mittels Sprachbefehlen über das benannte Sprachtelekommunikationsnetzwerks zu steuern, wobei jeder der benannten persönlichen Sprachsoftwareagenten persönlich mit einem der benannten Benutzern oder mit einer eingeschränkten Gruppe von Benutzern assoziiert ist, wobei die benannten persönlichen Sprachsoftwareagenten die Aktivierung von personalisierbaren Diensten mittels Sprachbefehlen, welche während dem Konversationsteil einer Kommunikation zwischen zwei Benutzern des benannten Sprachtelekommunikationsnetzwerks ausgewechselt werden, zu steuern erlauben,
**gekennzeichnet durch** Mittel, um den benannten Benutzern zu erlauben, **durch** das Internetnetzwerk einen neuen persönlichen Sprachsoftwareagenten in das benannte System zu installieren oder einen schon installierten persönlichen Sprachsoftwareagenten zu parametrieren.

34. Telekommunikationssystem mit einem persönlichen Sprachsoftwareagenten (22), der an einer Audiokonferenz mit mehreren Benutzern (1, 3) in einem Sprachtelekommunikationsnetzwerk teilnimmt, um mindestens einem der benannten Benutzern Mehrwertdienste während dem Konversationsteil einer Kommunikation anzubieten, **dadurch gekennzeichnet, dass** der benannte persönliche Sprachsoftwareagent (22) durch einen der benannten Benutzer über das Internetnetzwerk in die Infrastruktur des benannten Sprachtelekommunikationsnetzwerks installiert ist und nur einem der benannten Benutzer zugeordnet ist.

## Claims

1. Method for providing personalizable services to a user (1) in a voice telecommunications network (2), including:
making available to said user at least one personal voice software agent (22) for supplying to him at least one service, said personal voice software agents (22) being lodged in one or several computers in the infrastructure of said voice telecommunications network, said personal voice software agents using a voice analysis system (28) allowing said user (1) to command them by means of voice commands through said voice telecommunications network, said computer being a server,
commanding the activation of said service by means of voice commands uttered by said user (1) during the conversational part of a communication with another user (3) of said voice telecommunications network (2),
**characterized by** a step during which said user (1) connects over Internet to said server in order to install a new personal voice software agent in the infrastructure of said telecommunications network (2) or to parameter an already installed personal voice software agent.

2. Method according to claim 1, wherein said personal voice software agent is autonomous, persistent, capable of intervening by itself in the conversation and of adapting by itself its behaviour.

3. Method according to one of the claims 1 or 2, wherein an audio conference is established through said voice telecommunications network between said users (1, 3) and said personal voice software agent.

4. Method according to one of the claims 1 to 3, wherein several distinct personal voice software agents (22,24,25,26) are put at the disposal of at least certain users.

5. Method according to claim 4, wherein at least certain of said personal voice software agents (22,24,25,26) put at the disposal of a user work together to delegate tasks to each other.

6. Method according to one of the claims 1 to 5, wherein at least certain of said personal voice software agents (22) are installed in the infrastructure of said voice telecommunications network (2) by the user (1) himself.

7. Method according to claim 6, wherein at least certain of said personal voice software agents (22) are installed in the infrastructure of said voice telecommunications network (2) by means of voice commands.

8. Method according to one of the claims 1 to 7, including a step of personalizing the behaviour of at least certain of said personal voice software agents (22) by said user (1).

9. Method according to claim 8, wherein the behaviour of at least certain of said personal voice software agents (22) is personalized by means of voice commands.

10. Method according to one of the claims 1 to 9, wherein the default behaviour of at least one personal voice software agent (22) depends on the called user (3).

11. Method according to one of the claim 1 to 10, wherein said voice analysis system (28) performs a voice analysis depending on the user and based on voice and/or language models (23) memorized in the infrastructure of the voice telecommunications network.

12. Method according to one of the claims 1 to 11, wherein the communications established by said user (1) are routed by said personal voice software agent (22).

13. Method according to one of the claims 1 to 11, wherein the communications established by said user (1) are transported by packets to said other user (3),
a copy of said packets being sent in multicast to said personal voice software agent (22).

14. Method according to one of the claims 1 to 11, wherein the user is connected to said personal voice software agent (22) as soon as he connects into said voice telecommunications network.

15. Method according to one of the claims 1 to 11, including a preliminary step during which said user dials a dedicated number to connect to his personal voice software agent (22).

16. Method according to one of the claims 1 to 11, wherein the user is permanently connected in said voice telecommunications network, with said personal voice software agent (22) permanently monitoring the connection.

17. Method according to one of the claims 1 to 16, wherein said personal voice software agent has two distinct operation modes: an activated mode, in which it can participate in a conversation, and a listening mode in which it cannot participate in a conversation.

18. Method according to claim 17, including a step of mode switch of said personal voice software agent by means of a voice command of said user.

19. Method according to claim 17, including a step of mode switch of said personal voice software agent by means of a DTMF-command of said user.

20. Method according to claim 17, including a step of mode switch of said personal voice software agent activated by an event detected by said personal voice software agent.

21. Method according to claim 17, including a step of mode switch of said personal voice software agent activated through a web command.

22. Method according to claim 17, wherein said activated mode is selected when the connection is established.

23. Method according to one of the claim 1 to 22, including a step of verifying the user's rights to use said personal voice software agent (22) based on the voice print of said user.

24. Method according to one of the claims 1 to 23, including a step during which said personal voice software agent (22) archives a recording of at least part of said conversation in a memory space.

25. Method according to one of the claims 1 to 24, including a step during which said personal voice software agent (22) converts into text at least part of said conversation to archive it or to send it by e-mail.

26. Method according to claim 25, wherein said personal voice software agent archives the interventions of the different users.

27. Method according to one of the claims 1 to 26, including a step during which said personal voice software agent adds an additional user in an established communication.

28. Method according to one of the claims 1 to 27, including a step during which said personal voice software agent removes a user in an established communication.

29. Method according to one of the claims 1 to 28, including a step during which said personal voice software agent accesses information on the web or in a database and reproduces orally the found information.

30. Method according to one of the claims 1 to 29, including a step during which said personal voice software agent accesses an electronic diary of said user.

31. Method according to one of the claims 1 to 30, including a step during which said personal voice software agent performs a financial and/or commercial transaction on behalf of said user.

32. Method according to claim 31, including a step during which said personal voice software agent debits an account or a credit card of said user to conclude said transaction, said personal voice software agent having the numbers and indications necessary for proceeding with this debit without the user having to communicate them.

33. Data processing computer system designed to be connected to a voice telecommunications network (2) and wherein at least one personal voice software agent (22) is stored, said personal voice software agents using a voice analysis system (28) allowing the users of said voice telecommunications network to command them by means of voice commands through said voice telecommunications network, each of said personal voice software agents being associated personally to one of said users or to a limited group of users, said personal voice software agent allowing personalizable services to be activated by means of voice commands exchanged during the conversational part of a communication between two users of said voice telecommunications network,
**characterized by** means for allowing said users, through the Internet network, to install a new personal voice software agent into said system or to parameter an already installed personal voice software agent.

34. Telecommunications system including a personal voice software agent (22) participating in an audio conference with several users (1, 3) in a voice telecommunications network to offer value-added services to at least one of said users during the conversational part of a communication, **characterized in that** said personal voice software agent is installed by one of said users through the Internet network in the infrastructure of said voice telecommunications network and affected to only one of said users.
